(19) Europäisches Patentamt
European Patent Office
Office européen des brevets

(11) **EP 2 598 554 B1**

(12) **FASCICULE DE BREVET EUROPEEN**

(45) Date de publication et mention
de la délivrance du brevet:
**29.10.2014 Bulletin 2014/44**

(21) Numéro de dépôt: **11730682.9**

(22) Date de dépôt: **12.07.2011**

(51) Int Cl.:
*C08G 69/04* (2006.01)    *C08G 69/28* (2006.01)

(86) Numéro de dépôt international:
**PCT/EP2011/061806**

(87) Numéro de publication internationale:
**WO 2012/013481 (02.02.2012 Gazette 2012/05)**

(54) **PROCEDE DE FABRICATION DE POLYAMIDE**

VERFAHREN ZUR POLYAMIDHERSTELLUNG

METHOD FOR PRODUCING POLYAMIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.07.2010 FR 1056158**

(43) Date de publication de la demande:
**05.06.2013 Bulletin 2013/23**

(73) Titulaire: **RHODIA OPERATIONS
93306 Aubervilliers (FR)**

(72) Inventeur: **LOMEL, Sébastien
F-38540 Saint-Just-Chaleyssin (FR)**

(74) Mandataire: **Ridray, Annabelle et al
Rhodia Operations
Direction Propriété Industrielle
85, avenue des frères Perret
69192 Saint Fons (FR)**

(56) Documents cités:
**EP-A2- 0 530 592      FR-A- 1 449 694
GB-A- 1 093 203      JP-A- 1 051 433
JP-A- 2002 220 463   JP-A- 2004 204 027
US-A- 3 257 173      US-A1- 2001 012 883**

**EP 2 598 554 B1**

**Description**

La présente invention concerne un procédé de fabrication de polyamide. Elle concerne plus particulièrement un procédé comprenant une étape de polymérisation initiale sous pression à partir de monomères et une étape de finition en phase liquide sous une pression voisine de la pression atmosphérique, l'étape de finition mettant en oeuvre une injection de gaz inerte selon une direction essentiellement parallèle à celle de l'écoulement du flux réactionnel liquide et dans le sens de cet écoulement.

Le polyamide est du type de ceux obtenus par polycondensation à partir de diacides et de diamines et/ou du type de ceux obtenus par polycondensation à partir de lactames et/ou aminoacides. Le procédé est tout à fait adapté à la fabrication de polyhexaméthylène adipamide.

Les polyamides sont des polymères présentant un intérêt industriel et commercial important. Les polyamides thermoplastiques sont obtenus soit par réaction entre deux monomères différents, soit par polycondensation d'un seul monomère. L'invention s'applique d'une part aux polyamides issus de deux monomères différents, dont le polyamide le plus important est le poly(hexaméthylène adipamide). Bien entendu, ces polyamides peuvent être obtenus à partir d'un mélange de diacides et de diamines. Ainsi, dans le cas du poly(hexaméthylène adipamide), les monomères principaux sont l'hexaméthylène diamine et l'acide adipique. Toutefois, ces monomères peuvent comprendre jusqu'à 25 % en mole d'autres monomères diamines ou diacides ou même des monomères aminoacides ou lactames. L'invention s'applique d'autre part aux polyamides issus d'un seul monomère, dont le polyamide le plus important est le polycaprolactame. Bien entendu, ces polyamides peuvent être obtenus à partir d'un mélange de lactames et/ou aminoacides. Dans le cas du polycaprolactame, le monomère principal est le caprolactame. Toutefois, ces monomères peuvent comprendre jusqu'à 25 % en mole d'autres monomères aminoacides ou lactames ou même des monomères diamines ou diacides.

La classe de polyamides issue de deux monomères différents est généralement fabriquée en utilisant comme matière première, un sel obtenu par mélange en quantité stoechiométrique d'un diacide avec une diamine, en général dans un solvant comme l'eau.

Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

La solution de sel N est éventuellement concentrée par évaporation partielle ou totale de l'eau.

La classe de polyamides issue d'un seul monomère est généralement fabriquée en utilisant comme matière première, un lactame et/ou un aminoacide, et une faible quantité d'eau ; la proportion en poids de l'eau est généralement comprise entre 1 et 15%.

Le polyamide est obtenu par chauffage à température et pression élevées d'une solution aqueuse des monomères (par exemple une solution de sel Nylon telle que décrite ci-dessus), ou d'un liquide comprenant les monomères, pour évaporer l'eau et/ou le liquide tout en évitant la formation de phase solide.

On connaît plusieurs procédés utilisant différents types de dispositifs pour la fabrication de polyamides.

On connaît des procédés au cours desquels la polycondensation est effectuée en phase fondue comprenant la solution de sel N ou le liquide comprenant les monomères, le flux réactionnel s'écoulant à faible vitesse dans la partie inférieure d'un réacteur d'axe horizontal. La partie supérieure du réacteur comprend de la vapeur d'eau, évaporée à partir de la solution initiale ou produite par la réaction de polycondensation. Le flux réactionnel fondu est en présence d'une phase gazeuse qui présente sensiblement la même pression dans tout le réacteur. La vapeur d'eau est en partie évacuée, de manière à contrôler la pression. La réaction de polycondensation est ainsi effectuée à une pression d'environ 0,5-2,5 MPa à une température d'environ 215-300°C. Le flux réactionnel subit ensuite une détente non adiabatique jusqu'à pression atmosphérique par passage dans un flasheur, c'est-à-dire un dispositif tubulaire chauffé présentant une surface d'échange suffisante pour éviter la cristallisation du produit. Au cours de cette opération de l'eau résiduelle contenue dans le flux de matière est vaporisée. La vapeur et le flux liquide sont ensuite séparés dans un séparateur gaz-liquide. La polycondensation est poursuivie en phase fondue sous pression atmosphérique ou réduite de manière à atteindre le degré d'avancement souhaité.

On connaît d'autres procédés, au cours desquels la polycondensation est effectuée en phase fondue en réacteur tubulaire, présentant un rapport longueur/diamètre élevé. Le flux réactionnel s'écoule à grande vitesse, occupant toute la section du réacteur. Le régime hydrodynamique de ce réacteur est tel que la vapeur d'eau issue du milieu réactionnel est mêlée au flux de matière fondue par exemple sous forme de bulles. La vitesse, la composition, la pression et la température de la phase gazeuse de vapeur d'eau varient le long du réacteur. La surface d'échange entre milieu réactionnel et fluide caloporteur est importante, ce qui favorise les transferts de chaleur. Les temps de séjour sont généralement plus courts que dans les procédés décrits précédemment.

Le flux de matière fondue, subit une polycondensation, libérant de la vapeur d'eau. Il subit le long du réacteur une détente progressive, par perte de charge.

Le polyamide sort du serpentin à pression atmosphérique, avec un degré d'avancement de polymérisation intermédiaire ; sa montée en masse se poursuit ensuite au cours d'une étape ultime de finition. Ces procédés présentent l'avantage de mettre en oeuvre des installations très compactes et de conduite très aisée.

Le poids moléculaire du polyamide après la polymérisation initiale sous pression est peu élevé, et l'étape de finition permet de poursuivre la polymérisation afin de préparer un polyamide de degré de polymérisation souhaité qui peut être utilisé par exemple pour la fabrication de fils, d'articles moulés etc.

L'efficacité de cette étape de finition est conditionnée notamment par l'efficacité de l'évacuation de l'eau produite par la réaction de polycondensation. En effet plus on élimine efficacement cette eau, plus on déplace l'équilibre de la réaction de polycondensation en faveur de l'avancement de la réaction donc d'un poids moléculaire plus élevé.

Plusieurs méthodes de finition sont connues.

Une première méthode est la finition sous pression atmosphérique selon laquelle le ciel gazeux autogène est principalement constitué de vapeur d'eau. Cette méthode ne se révèle pas très efficace en termes d'évacuation de l'eau de polycondensation, ce qui se traduit par une moindre productivité de cette méthode.

Une deuxième méthode est la finition sous pression réduite. Cette méthode permet une évacuation plus efficace de l'eau de polycondensation, et donc une meilleure productivité de l'étape de finition. Cependant selon ce procédé sous pression réduite, il faut veiller à supprimer toute entrée d'air dans le dispositif de finition, afin d'éviter une dégradation du polymère par oxydation. D'autre part cette méthode de finition favorise l'encrassement du dispositif. Ce procédé demande beaucoup de précautions et est donc difficile à mettre en oeuvre.

Il est également connu, dans les procédés continus de préparation de polyamide, d'injecter un gaz inerte tel que l'azote dans le réacteur de finition, tel que décrit dans FR 1449694. Cette méthode bénéficie des mêmes avantages que la finition sous vide, à savoir une meilleure productivité de l'étape de finition, sans présenter ses inconvénients. En effet cette méthode permet de limiter de façon aisée le risque de dégradation du polymère chaud, par élimination du risque d'entrée d'oxygène dans le réacteur de finition. Le gaz inerte généralement sec permet également d'éliminer l'eau produite lors de la réaction de polymérisation, ce qui permet d'accélérer cette dernière.

La méthode et les conditions d'introduction du gaz inerte dans le réacteur de finition ont une influence notamment sur la réaction de polymérisation qui intervient lors de l'étape de finition. Aussi est-on toujours à la recherche de moyens de contrôler et d'optimiser cette réaction de polymérisation. Un bon contrôle et une bonne optimisation de cette réaction de polymérisation peuvent permettre d'augmenter la productivité de cette étape de finition, et d'améliorer la régularité des caractéristiques du polyamide, telle que la viscosité.

Par ailleurs, on est toujours à la recherche de procédés de finition flexibles, qui puissent s'adapter facilement par exemple en fonction de la capacité souhaitée des lignes de production industrielles, cette capacité pouvant varier dans le temps.

A cette fin, l'invention propose un procédé de fabrication en continu d'un polyamide comprenant une étape de polymérisation initiale sous pression à partir de monomères et une étape de finition en phase liquide sous une pression voisine de la pression atmosphérique, l'étape de finition étant réalisée dans un réacteur d'axe horizontal, dans la partie inférieure duquel s'écoule un flux réactionnel liquide, et dans la partie supérieure duquel - la partie supérieure étant constituée par un ciel gazeux au-dessus du flux réactionnel liquide- on injecte un gaz inerte, caractérisé en ce que le gaz inerte est injecté à la fin du réacteur de finition, suivant une direction essentiellement parallèle à celle de l'écoulement du flux réactionnel liquide et dans le sens de cet écoulement.

Par « pression voisine de la pression atmosphérique » on entend une pression comprise entre la pression atmosphérique et 1,5 fois la pression atmosphérique, avantageusement une pression comprise entre la pression atmosphérique et 1,2 fois la pression atmosphérique.

Par « réacteur d'axe horizontal » on entend un réacteur dont l'axe forme un angle avec l'horizontale d'au plus 10°, avantageusement d'au plus 5°, de préférence au plus 3°.

Par « fin » du réacteur de finition, on entend la partie du réacteur située entre la section verticale du réacteur située à une abscisse (l'axe des abscisses correspondant à l'axe horizontal du réacteur) égale 0,8 * L, L étant la longueur du réacteur (l'abscisse 0 correspondant à l'entrée du réacteur, l'abscisse 1 L correspondant à la sortie du réacteur), et la section verticale du réacteur située à une distance de 0,5 cm, de préférence de 1 cm et encore plus préférentiellement de 5 cm par rapport à la paroi verticale qui termine le réacteur.

Par « une direction essentiellement parallèle à celle de l'écoulement », on entend que cette direction d'injection forme un angle compris entre -45 et + 45°, et de préférence compris entre -30 et +30°, par rapport à l'axe correspondant à la direction de l'écoulement du flux réactionnel liquide, sans pour autant sortir du cadre de l'invention.

Le procédé de fabrication selon l'invention est un procédé de fabrication de polyamides du type de ceux obtenus à partir d'acides dicarboxyliques et de diamines et/ou du type de ceux obtenus par polycondensation à partir de lactames et/ou aminoacides.

Les monomères lactames ou aminoacides peuvent par exemple être choisis parmi le caprolactame, l'acide 6-aminohexanoïque ; l'acide 5-aminopentanoïque, l'acide 7-aminoheptanoïque, l'acide 11-aminoundécanoïque, le dodécanolactame. Le lactame préféré est le caprolactame.

Les monomères acides dicarboxyliques peuvent par exemple être choisis parmi l'acide glutarique, l'acide adipique, l'acide subérique, l'acide sébacique, l'acide dodécanedioïque ; l'acide 1,2-ou 1,3-cyclohexane dicarboxylique ; l'acide 1,2-ou 1,3-phénylène diacétique ; l'acide 1,2-ou 1,3-cyclohexane diacétique ; l'acide isophthalique ; l'acide téréphthalique ; l'acide 4,4'-benzophénone dicarboxylique ; l'acide 2,5-naphthalène dicarboxylique; et l'acide p-t-butyl isophthalique, les sels alcalins de l'acide sulfo 5-isophtalique. L'acide dicarboxylique préféré est l'acide adipique.

Les monomères diamines peuvent par exemple être choisis parmi l'hexaméthylène diamine ; la butane diamine ; la pentane diamine ; la 2-méthyl pentaméthylène diamine ; la 2-méthyl hexaméthylène diamine ; la 3-méthyl hexaméthylène diamine ; la 2,5-diméthyl hexaméthylène diamine ; la 2,2-diméthylpentaméthylène diamine ; l'heptane diamine ; la nonane diamine ; la 5-méthylnonane diamine ; la dodécaméthylène diamine ; la 2,2,4-et 2,4,4-triméthyl hexaméthylène diamine ; la 2,2,7,7-tétraméthyl octaméthylène diamine ; la méta-xylylène diamine ; la paraxylylène diamine ; l'isophorone diamine ; le diaminodicyclohexyl méthane et les diamines aliphatiques en C2 -C16 qui peuvent être substituées par un ou plusieurs groupements alkyles. La diamine préférée est l'hexaméthylène diamine.

Le procédé de l'invention est un procédé de fabrication continu, les transformations s'effectuant sur des flux de matière. Les flux de matière subissent des transformations au cours des différentes étapes, effectuées dans un ou plusieurs appareillages. Le procédé comprend au moins les deux étapes successives décrites ci-dessus, qui sont une étape de polymérisation initiale sous pression, et une étape de finition en phase liquide sous une pression voisine de la pression atmosphérique. Il peut évidemment en comporter d'autres en amont ou en aval, ou même entre celles-ci.

La principale transformation opérée lors de la mise en oeuvre du procédé est généralement la polymérisation d'un acide dicarboxylique sur une diamine ou d'un lactame et/ou aminoacide. Cette transformation est bien connue de l'homme du métier, par exemple pour la fabrication de polyamide 66 à partir d'acide adipique et d'hexaméthylène diamine, ou pour la fabrication de polyamide 6 à partir de caprolactame. Cette polymérisation, qui est une polycondensation dans le cas d'un acide dicarboxylique et d'une diamine, libère généralement de l'eau, sous forme de vapeur.

On définit le degré d'avancement de la polycondensation comme suit :

Degré d'avancement (%) = [(nombre de moles de motifs amide formés)/(nombre de moles de fonctions réactives initiales en défaut)]*100

Le nombre de moles de fonctions réactives initiales en défaut est :

- soit le nombre de moles de fonctions acides carboxyliques issues des monomères présentes initialement dans le milieu réactionnel, si les fonctions réactives en défaut initialement dans ce milieu sont les fonctions acides carboxyliques (par rapport aux fonctions amines),
- soit le nombre de moles de fonctions amines issues des monomères présentes initialement dans le milieu réactionnel, si les fonctions réactives en défaut initialement dans ce milieu sont les fonctions amines (par rapport aux fonctions acides carboxyliques).

Selon le degré d'avancement de la polycondensation, le produit obtenu peut être qualifié, d'oligomère de polyamide, de prépolymère de polyamide ou de polyamide.

Le degré d'avancement de la polycondensation à l'issue de l'étape de polymérisation initiale est avantageusement supérieur à 60%, de préférence supérieur à 90 %, encore plus préférentiellement supérieur à 95%.

L'étape de polymérisation initiale du procédé de l'invention est connue de l'homme du métier. Elle comprend généralement une phase de polymérisation sous pression à partir des monomères, et une phase de détente du milieu de polymérisation pour éliminer de l'eau par évaporation.

La température et la pression lors de l'étape de polymérisation initiale sont telles qu'il n'y ait pas de solidification du flux de matière.

La polycondensation nécessite un apport de chaleur, la température d'alimentation étant généralement très inférieure à la température de fusion du polymère final. Les installations utilisées pour la mise en oeuvre de l'étape de polymérisation initiale comprennent donc des moyens d'apport de chaleur, dans le but de maintenir le milieu réactionnel à une température suffisante pour éviter l'apparition d'une phase solide. Elles comprennent de même tous les moyens qui peuvent être nécessaires à sa mise en oeuvre, comme des pompes, des moyens d'analyse, de contrôle, des vannes, des moyens d'introduction ou de stockage de flux de matière, des mélangeurs statiques.

Le réacteur, lors de l'étape de polymérisation initiale, est maintenu à une température suffisante pour que la polycondensation ait lieu. On peut avantageusement alimenter le réacteur avec un flux de monomères préchauffé, dont la température est proche de la température de début de polycondensation.

La pression dans le réacteur de polymérisation initiale est généralement comprise entre 0,5 et 3,5 MPa, et la température entre 180 et 320°C.

Le flux de produit de polycondensation subit ensuite une détente, pour atteindre une pression généralement voisine de la pression atmosphérique.

Le produit de polycondensation issu de l'étape de polymérisation initiale est un polymère ou prépolymère fondu. Il peut comprendre une phase vapeur essentiellement constituée de vapeur d'eau, susceptible d'avoir été formée et/ou vaporisée au cours de la phase de détente.

Ce produit peut être soumis à une étape de séparation de phase vapeur.

Ce produit est ensuite soumis à une étape de finition en phase liquide afin d'atteindre le degré de polycondensation désiré. La finition consiste à maintenir le produit de polycondensation à l'état fondu, sous une pression voisine de la pression atmosphérique, pendant un temps suffisant pour atteindre le degré d'avancement désiré. Une telle opération est connue de l'homme du métier. La température de l'étape de finition est avantageusement supérieure ou égale à 200°C et dans tous les cas supérieure à la température de solidification du polymère. Le temps de séjour de la phase liquide dans le réacteur de finition est avantageusement supérieur à 1 minute, de préférence supérieur à 5 min. Il n'excède de préférence pas 60 minutes.

Les installations utilisées pour la mise en oeuvre de l'étape de finition comprennent des moyens d'apport de chaleur, dans le but de maintenir le milieu réactionnel à une température suffisante pour éviter l'apparition d'une phase solide. Elles comprennent de même tous les moyens qui peuvent être nécessaires à sa mise en oeuvre, comme des pompes, des moyens d'analyse, de contrôle, des vannes, des moyens d'introduction ou de stockage de flux de matière, des mélangeurs statiques.

Le réacteur de finition peut être placé dans une enceinte ou double-enveloppe comprenant un fluide caloporteur.

Le réacteur de finition est d'axe horizontal. Il s'agit généralement d'un réacteur cylindrique horizontal ou d'un réacteur horizontal de section ovale.

La longueur et le diamètre du réacteur sont choisis, et le débit du flux réactionnel liquide peut être adapté et contrôlé pour obtenir le degré d'avancement désiré.

La longueur du réacteur de finition peut être de l'ordre de trois fois le diamètre interne du réacteur.

Le réacteur de finition est partiellement rempli par la phase liquide. Généralement la proportion de remplissage du réacteur de finition par la phase liquide est comprise entre 20 et 75% de l'espace initialement disponible dans le réacteur.

Le réacteur de finition comprend généralement un agitateur. L'agitateur est monté horizontalement, en vue de sa rotation à l'intérieur du réacteur. Il peut s'agir par exemple d'une vis d'Archimède, d'un agitateur de type cage, ou de disques successifs, ajourés ou non, montés sur un arbre. Le diamètre de l'agitateur est en général un peu inférieur au diamètre intérieur du réacteur de finition. L'axe de l'agitateur peut être excentré par rapport à l'axe du réacteur de finition. Ceci permet notamment la circulation de la phase gazeuse dans le réacteur. Cette circulation peut également être assurée par des trous présents par exemple au niveau des disques de l'agitateur. La vitesse de rotation de l'agitateur peut par exemple être comprise entre 0,1 et 15 tours/min.

L'agitateur peut comprendre plusieurs disques qui définissent des compartiments dans le réacteur de finition. L'agitateur peut par exemple comprendre entre 5 et 15 disques. Le dernier compartiment du réacteur de finition correspond à l'espace compris entre le dernier disque de l'arbre et la paroi verticale qui termine le réacteur de finition. Avantageusement lorsque l'on met en oeuvre un tel agitateur dans le cadre du procédé de l'invention, l'injection de gaz inerte est réalisée dans le dernier compartiment du réacteur de finition tel que défini ci-dessus.

Le réacteur de finition comprend un ou plusieurs orifices pour l'injection de gaz inerte et une ou plusieurs ouvertures pour l'évacuation des gaz. Généralement l'ouverture pour l'évacuation des gaz se situe dans la première moitié du réacteur de finition. L'orifice pour l'injection de gaz inerte est généralement situé en aval de l'ouverture d'évacuation des gaz, par rapport au sens d'écoulement du flux réactionnel liquide.

Tout dispositif d'injection de gaz inerte peut être mis en oeuvre, dans la mesure où il permet l'injection de gaz suivant une direction essentiellement parallèle à celle de l'écoulement du flux réactionnel liquide et dans le sens de cet écoulement. La sortie du dispositif d'injection de gaz peut consister en une fente rectangulaire orientée vers la paroi verticale qui termine le réacteur de finition. Il peut également s'agir d'une injection multipoints.

Le gaz inerte peut être de l'azote, du dioxyde de carbone, un gaz rare tel que l'hélium, l'argon, le néon. Le gaz inerte injecté dans le réacteur de finition est de préférence de l'azote. Le gaz inerte est généralement sec.

Le gaz inerte peut éventuellement être préchauffé avant d'être injecté dans le réacteur de finition. La température de préchauffage est généralement comprise entre 70 et 300°C.

La pression d'injection du gaz inerte dans le réacteur de finition est avantageusement légèrement supérieure à la pression de finition dans le réacteur.

Avantageusement le facteur de dilution de la vapeur d'eau dans le ciel du réacteur de finition (partie du ciel située entre l'ouverture d'évacuation des gaz et la paroi verticale terminant le réacteur de finition), lorsque le gaz inerte est introduit, est supérieur à 2. On définit ce facteur de dilution F selon la formule suivante :

F = concentration de la vapeur d'eau avant introduction de gaz inerte/concentration de la vapeur d'eau après introduction du gaz inerte= (Q gaz inerte + Q vapeur d'eau) / Q vapeur d'eau, Q représentant un débit en $m^3$/h.

Le débit Q de gaz inerte dans la formule est calculé dans les conditions de pression et de température du réacteur de finition.

Le facteur de dilution est calculé en considérant uniquement le ciel gazeux de la zone du réacteur de finition située entre l'ouverture d'évacuation du gaz et la paroi verticale terminant le réacteur de finition.

Le débit de vapeur d'eau est évalué à partir du calcul de la quantité d'eau de polycondensation générée dans cette zone. Celle-ci est évaluée à partir de la masse molaire moyenne en nombre du polymère à l'entrée de cette zone, c'est-à-dire au niveau de l'ouverture d'évacuation des gaz, et de la masse molaire moyenne en nombre souhaitée du polymère en sortie de réacteur de finition. La masse molaire moyenne en nombre du polymère au niveau de l'ouverture d'évacuation des gaz, connaissant l'abscisse X (l'axe des abscisses correspondant à l'axe horizontal du finisseur) de cette ouverture, est estimée en première approximation en utilisant la relation suivante :

$$Mn\ (X) = Mn\ (X=0) + [Mn\ (X=1) - Mn\ (X=0)]^*X$$

avec X=0 correspondant à l'entrée du finisseur et X=1 à la sortie du finisseur, Mn étant une masse molaire moyenne en nombre.

Avantageusement le temps de séjour de la phase gazeuse dans le réacteur de finition (partie du réacteur située entre l'ouverture d'évacuation des gaz et la paroi verticale terminant le réacteur de finition), est inférieur ou égal à 30 min, de préférence inférieur ou égal à 20 min.
On définit le temps de séjour t selon la formule suivante :

$$t= V\ ciel\ du\ réacteur/\ (Q\ gaz\ inerte + Q\ vapeur\ d'eau),$$

V représentant un volume en $m^3$, Q représentant un débit en $m^3/h$.
Le temps de séjour de la phase gazeuse est calculé en considérant uniquement le ciel gazeux de la zone du réacteur de finition située entre l'ouverture d'évacuation du gaz et la paroi verticale terminant le réacteur de finition. Le débit de vapeur d'eau et de gaz inerte sont déterminés comme décrit ci-dessus pour le facteur de dilution.

Le polyamide obtenu à la fin de l'étape de finition peut être refroidi et mis sous forme de granulés. Il présente de préférence après l'étape de finition un degré d'avancement de polycondensation supérieur à 99%.
Le polyamide obtenu par le procédé de l'invention sous forme fondue peut être directement mis en forme ou être extrudé et granulé, pour une éventuelle étape de post-condensation et/ou pour une mise en forme ultérieure après fusion.
Le polyamide peut être utilisé pour un grand nombre d'applications, notamment pour la fabrication de fils, fibres ou filaments, ou pour des mises en forme d'articles par injection moulage, extrusion. Il peut notamment être utilisé dans des compositions de plastiques techniques.
Le procédé de l'invention présente de nombreux avantages.
Le procédé de l'invention permet de contrôler et d'optimiser la réaction de polycondensation lors de l'étape de finition. Ainsi la productivité de cette étape de finition est améliorée, et le poids moléculaire du polyamide est maîtrisé grâce au procédé de l'invention.
Par ailleurs, le procédé de l'invention est flexible, puisqu'il s'adapte facilement par exemple à une variation de la capacité de la ligne de production industrielle.

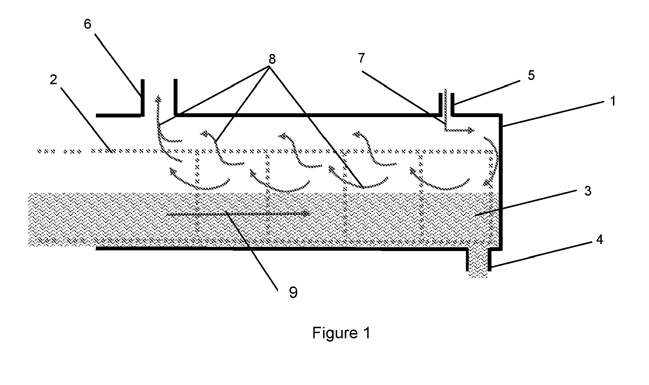

La figure 1 représente un schéma d'un finisseur fonctionnant selon un procédé conforme au procédé de l'invention, qui est illustratif et n'a aucun caractère limitatif.
D'autres détails ou avantages de l'invention apparaîtront plus clairement à la vue des exemples donnés ci-dessous.

## EXEMPLES

Les débits d'azote mentionnés dans les exemples sont mesurés à température ambiante.

## Brève description de la figure

La figure 1 représente un finisseur 1 muni d'un mobile d'agitation 2, dans la partie inférieure duquel s'écoule un flux réactionnel liquide 3 qui est évacué via une ouverture de sortie du flux liquide 4. La partie supérieure du finisseur est constituée par un ciel gazeux. Le gaz inerte est injecté via un orifice d'injection de gaz 5 selon une direction 7, c'est-à-dire suivant une direction parallèle à celle de l'écoulement du flux réactionnel liquide 9 et dans le sens de cet écoulement. Le gaz inerte circule de façon schématique selon le sens de circulation 8, avant d'être évacué via l'ouverture d'évacuation des gaz 6.

## Exemple comparatif 1

Un flux d'environ 20 t / j de prépolymère de polyamide 66 liquide de masse molaire moyenne en nombre de 5600 g/mol obtenu selon un procédé standard de prépolymérisation de type polyamide 66, est introduit à une température voisine de 280°C dans un finisseur horizontal comprenant un mobile d'agitation horizontal (disques successifs montés sur un arbre), fonctionnant à une pression de 1020 hPa et équipé d'une sortie pour la phase vapeur située au milieu du finisseur. Dans ce finisseur est également introduit un débit de 2 m$^3$/h d'azote sec, selon une injection multipoints (2), à travers un orifice situé entre le dernier disque du mobile d'agitation et la paroi verticale qui termine le finisseur, selon une direction verticale, orthogonale à la direction de l'écoulement du flux liquide. Dans ces conditions de pression et de température, le facteur de dilution F est de 4,3 et le temps de séjour de la phase gazeuse t est de 17,1 minutes. On extrait de ce finisseur un polymère de masse molaire moyenne en nombre égale à 16400 g/mol qui permet un fonctionnement satisfaisant du métier à filer attelé.

On souhaite augmenter la capacité de la ligne. Le débit de polymère extrait du finisseur est alors augmenté par augmentation du débit global de la ligne et sa masse molaire moyenne en nombre est régulée en fixant la consigne de niveau du finisseur au maximum et en augmentant le débit d'azote. L'augmentation progressive du débit d'azote jusqu'à la valeur de 5 m$^3$/h ne permet pas de maintenir la masse molaire moyenne en nombre du polymère, qui chute en fonction du débit de polymère, jusqu'à 15100 g/mol lorsque le débit de polymère est doublé. Un polymère avec une telle masse molaire ne permet pas un fonctionnement stable du métier à filer, la qualité du polymère est ainsi dégradée ce qui engendre notamment des casses. En adoptant ces conditions d'injection d'azote de 5m$^3$/h, le facteur de dilution F est de 5,1 et le temps de séjour de la phase gazeuse t est de 5,6 minutes. L'augmentation du débit d'azote jusqu'à une valeur supérieure à 7 m$^3$/h n'entraîne aucune augmentation de la masse du polymère. Le débit d'azote est alors réglé à 10 m$^3$/h, soit F= 9,8 et t= 3,1 minutes : la masse molaire du polymère augmente dans ce cas de façon incontrôlée, jusqu'à une valeur de 19350 g/mol, rendant inexploitable le polymère en sortie de finisseur du fait d'une masse trop élevée et par conséquent d'une viscosité trop importante.

## Exemple 1

Dans le finisseur de l'exemple 1 comparatif fonctionnant avec un même flux de prépolymère d'environ 20 t/j, on modifie l'injection d'azote de façon à introduire ce dernier selon une direction parallèle à celle de l'écoulement du flux liquide et dans le sens de cet écoulement. Pour des mêmes conditions de marche de la ligne de polycondensation, l'adoption d'un débit d'azote de 2 m$^3$/h, soit F= 4,4 et t= 17,1 min dans les conditions de pression et de température du finisseur, permet une augmentation significative de la masse du polymère qui atteint 16800 g/mol et permet alors une marche encore plus stable des métiers à filer.

Un flux d'environ 40 t / j du même prépolymère que celui de l'exemple comparatif 1 est introduit dans le finisseur, et l'on adopte les mêmes conditions de marche de la ligne de polycondensation. L'adoption d'un débit de 10 m$^3$/h d'azote, soit F=9,4 et t=3,1 min, permet de conserver un polymère de masse molaire de 16800 g/mol de façon très stable et garantit un fonctionnement très satisfaisant des métiers au débit de 40 t / j de polymère pour la ligne de production. Le procédé de l'invention permet d'augmenter la capacité de la ligne de façon aisée et contrôlée, et de produire un fil d'une grande qualité sans déchet.

## Exemple 2 comparatif

Un flux de 1,7 t / h de prépolymère de polyamide 66 liquide d'indice de viscosité (IV) de 50 mL/g (mesuré avec 0,5 g de prépolymère pour 100 mL d'acide formique à 90%) obtenu selon un procédé standard de prépolymérisation de type polyamide 66, est introduit à une température voisine de 280°C dans un finisseur horizontal comprenant un mobile d'agitation horizontal (disques successifs montés sur un arbre), fonctionnant à une pression de 1100 hPa et équipé d'une sortie pour la phase vapeur située au milieu du finisseur. Dans ce finisseur est également introduit un débit de 8 m$^3$/h d'azote sec à travers un orifice situé entre le dernier disque du mobile d'agitation et la paroi verticale qui termine le finisseur, selon une direction parallèle à celle de l'écoulement du flux liquide et dans le sens contraire à celui de cet écoulement, à l'aide d'un dispositif d'injection dont la sortie consiste en une fente rectangulaire. La consigne de niveau du finisseur est fixée au maximum et on extrait de ce finisseur un polymère ayant un IV de 136 mL /g, qui ne correspond pas à la spécification produit égale à 140 mUg.

## Exemple 2

Dans le finisseur de l'exemple 2 comparatif, on modifie l'injection d'azote de façon à introduire ce dernier selon une direction parallèle à celle de l'écoulement du flux liquide et dans le sens de cet écoulement.

En adoptant les mêmes conditions de marche, que ce soit au niveau de la polycondensation ou de l'injection d'azote (notamment le débit d'azote), l'IV mesuré en sortie de finisseur est de 140 mL/g.

Le procédé de l'invention permet de produire un polymère parfaitement adapté à la spécification du produit.

## Revendications

1. Procédé de fabrication en continu d'un polyamide comprenant une étape de polymérisation initiale sous pression à partir de monomères et une étape de finition en phase liquide sous une pression voisine de la pression atmosphérique, l'étape de finition étant réalisée dans un réacteur d'axe horizontal, dans la partie inférieure duquel s'écoule un flux réactionnel liquide, et dans la partie supérieure duquel - la partie supérieure étant constituée par un ciel gazeux au-dessus du flux réactionnel liquide- on injecte un gaz inerte, **caractérisé en ce que** le gaz inerte est injecté à la fin du réacteur de finition, suivant une direction formant un angle compris entre - 45 ° et + 45 par rapport à l'axe correspondant à la direction de l'écoulement du flux réactionnel liquide et dans le sens de cet écoulement.

2. Procédé selon la revendication 1, **caractérisé en ce que** les monomères sont un acide dicarboxylique et une diamine.

3. Procédé selon la revendication 1 ou 2, **caractérisé en ce que** le polyamide est un polyamide 66 ou un copolyamide dont la majorité des motifs de répétition sont des motifs polyamide 66, l'acide dicarboxylique étant l'acide adipique et la diamine étant l'hexaméthylène diamine.

4. Procédé selon la revendication 1, **caractérisé en ce que** les monomères sont un lactame et/ou un aminoacide.

5. Procédé selon la revendication 4, **caractérisé en ce que** le polyamide est un polyamide 6 ou un copolyamide dont la majorité des motifs de répétition sont des motifs polyamide 6, le lactame étant le caprolactame et/ou l'aminoacide étant l'acide aminohexanoïque.

6. Procédé selon l'une des revendications précédentes, **caractérisé en ce que** le degré d'avancement de la polycondensation en sortie de l'étape de polymérisation initiale est supérieur à 90% pour un polyamide 66.

7. Procédé selon l'une des revendications précédentes, **caractérisé en ce que** le facteur de dilution de la vapeur d'eau dans le ciel du réacteur de finition, lorsque le gaz inerte est introduit, est supérieur à 2.

8. Procédé selon l'une des revendications précédentes, **caractérisé en ce que** le temps de séjour de la phase gazeuse dans le réacteur de finition, est inférieur ou égal à 30 min, de préférence inférieur ou égal à 20 min.

9. Procédé selon l'une des revendications précédentes, **caractérisé en ce que** le temps de séjour de la phase liquide dans le réacteur de finition est supérieur à 5 minutes.

10. Procédé selon l'une des revendications précédentes **caractérisé en ce que** le réacteur de polymérisation initiale et de finition sont placés dans une enceinte ou double-enveloppe comprenant un fluide caloporteur.

## Patentansprüche

1. Verfahren zur kontinuierlichen Herstellung eines Polyamids, umfassend einen Anfangspolymerisationsschritt unter Druck ausgehend von Monomeren und einen Abschlussschritt in flüssiger Phase unter einem Druck in der Nähe des Atmosphärendrucks, wobei der Abschlussschritt in einem Reaktor mit horizontaler Achse durchgeführt wird, in dessen unterem Teil ein flüssiger Reaktionsstrom strömt und in dessen oberem Teil - wobei der obere Teil aus einem Gaskopfraum über dem flüssigen Reaktionsstrom besteht - ein Inertgas eingeleitet wird, **dadurch gekennzeichnet, dass** das Inertgas am Ende des Abschlussreaktors gemäß einer Richtung, die gegenüber der Achse, die der Strömungsrichtung des flüssigen Reaktionsstroms entspricht, einen Winkel zwischen -45° und +45° bildet, und in Richtung dieser Strömung eingeleitet wird.

2. Verfahren nach Anspruch 1, **dadurch gekennzeichnet, dass** es sich bei den Monomeren um eine Dicarbonsäure und ein Diamin handelt.

**3.** Verfahren nach Anspruch 1 oder 2, **dadurch gekennzeichnet, dass** es sich bei dem Polyamid um ein Polyamid 66 oder ein Copolyamid, in dem es sich bei dem Hauptteil der Wiederholungseinheiten um Polyamid-66-Einheiten handelt, handelt, wobei es sich bei der Dicarbonsäure um Adipinsäure handelt und es sich bei dem Diamin um Hexamethylendiamin handelt.

**4.** Verfahren nach Anspruch 1, **dadurch gekennzeichnet, dass** es sich bei den Monomeren um ein Lactam und/oder eine Aminosäure handelt..

**5.** Verfahren nach Anspruch 4, **dadurch gekennzeichnet, dass** es sich bei dem Polyamid um ein Polyamid 6 oder ein Copolyamid, in dem es sich bei dem Hauptteil der Wiederholungseinheiten um Polyamid-6-Einheiten handelt, handelt, wobei sich bei dem Lactam um Caprolactam handelt und/oder es sich bei der Aminosäure um Aminohexansäure handelt.

**6.** Verfahren nach einem der vorhergehenden Ansprüche, **dadurch gekennzeichnet, dass** der Fortschrittsgrad der Polykondensation am Ausgang des Anfangspolymerisationsschritts für ein Polyamid 66 größer als 90% ist.

**7.** Verfahren nach einem der vorhergehenden Ansprüche, **dadurch gekennzeichnet, dass** der Verdünnungsfaktor des Wasserdampfs im Kopfraum des Abschlussreaktors beim Eintragen des Inertgases größer als 2 ist.

**8.** Verfahren nach einem der vorhergehenden Ansprüche, **dadurch gekennzeichnet, dass** die Verweilzeit der Gasphase im Abschlussreaktor kleiner gleich 30 min und vorzugsweise kleiner gleich 20 min ist.

**9.** Verfahren nach einem der vorhergehenden Ansprüche, **dadurch gekennzeichnet, dass** die Verweilzeit der flüssigen Phase im Abschlussreaktor größer gleich 5 Minuten ist.

**10.** Verfahren nach einem der vorhergehenden Ansprüche, **dadurch gekennzeichnet, dass** der Anfangspolymerisationsreaktor und der Abschlussreaktor in einer Kammer oder einem Doppelmantel mit einem Wärmeträgerfluid angeordnet sind.

**Claims**

**1.** Process for the continuous manufacture of a polyamide comprising a stage of initial polymerization under pressure starting from monomers and a stage of finishing in the liquid phase at a pressure in the vicinity of atmospheric pressure, the finishing stage being carried out in a horizontal-axis reactor, in the lower part of which a liquid reaction stream flows and in the upper part of which, the upper part being composed of a gaseous headspace above the liquid reaction stream, an inert gas is injected, **characterized in that** the inert gas is injected at the end of the finishing reactor, according to a direction forming an angle of between -45° and +45° with respect to the axis corresponding to the direction of the flow of the liquid reaction stream and in the direction of this flow.

**2.** Process according to Claim 1, **characterized in that** the monomers are a dicarboxylic acid and a diamine.

**3.** Process according to Claim 1 or 2, **characterized in that** the polyamide is a polyamide 66 or a copolyamide, the majority of the repeat units of which are polyamide 66 units, the dicarboxylic acid being adipic acid and the diamine being hexamethylenediamine.

**4.** Process according to Claim 1, **characterized in that** the monomers are a lactam and/or an amino acid.

**5.** Process according to Claim 4, **characterized in that** the polyamide is a polyamide 6 or a copolyamide, the majority of the repeat units of which are polyamide 6 units, the lactam being caprolactam and/or the amino acid being aminohexanoic acid.

**6.** Process according to one of the preceding claims, **characterized in that** the degree of progression of the polycondensation at the outlet of the stage of initial polymerization is greater than 90% for a polyamide 66.

**7.** Process according to one of the preceding claims, **characterized in that** the dilution factor for the steam in the headspace of the finishing reactor, when the inert gas is introduced, is greater than 2.

8. Process according to one of the preceding claims, **characterized in that** the residence time of the gas phase in the finishing reactor is less than or equal to 30 min and preferably less than or equal to 20 min.

9. Process according to one of the preceding claims, **characterized in that** the residence time of the liquid phase in the finishing reactor is greater than 5 minutes.

10. Process according to one of the preceding claims, **characterized in that** the initial polymerization reactor and finishing reactor are placed in an enclosure or jacket comprising a heat-exchange fluid.

Figure 1

**EP 2 598 554 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1449694